(19) Europäisches Patentamt / European Patent Office / Office européen des brevets

(11) **EP 3 992 119 B1**

(12) **EUROPEAN PATENT SPECIFICATION**

(45) Date of publication and mention
of the grant of the patent:
**13.11.2024  Bulletin 2024/46**

(21) Application number: **20214708.8**

(22) Date of filing: **16.12.2020**

(51) International Patent Classification (IPC):
**B65G 27/20** $^{(2006.01)}$

(52) Cooperative Patent Classification (CPC):
**B65G 27/20**

(54) **VIBRATING CONVEYOR AND METHOD OF CONTROLLING THE OPERATION OF THE VIBRATING CONVEYOR**

VIBRATIONSFÖRDERER UND VERFAHREN ZUR STEUERUNG DES BETRIEBS DES VIBRATIONSFÖRDERERS

CONVOYEUR VIBRANT ET PROCÉDÉ DE COMMANDE DU FONCTIONNEMENT DU CONVOYEUR VIBRANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.10.2020  PL 43583020**

(43) Date of publication of application:
**04.05.2022  Bulletin 2022/18**

(73) Proprietor: **Akademia Gorniczo-Hutnicza im. Stanislawa
Staszica w Krakowie
30-059 Krakow (PL)**

(72) Inventor: **Czubak, Piotr
30-231 Krakow (PL)**

(74) Representative: **JWP Patent & Trademark Attorneys
Sienna Center, ul. Zelazna 28/30
00-833 Warszawa (PL)**

(56) References cited:
**DE-C- 648 127      PL-A1- 425 950
PL-A1- 425 951      PL-B1- 225 660**

# Description

The subject matter of the invention is the vibrating conveyor and a method for controlling the operation of the vibrating conveyor, both applicable to the transport of materials, especially in the mining and processing industry.

Known vibrating conveyors are equipped with at least two vibrators suspended from a trough, where electric motors of the vibrators drive shafts with an unbalanced mass mounted on the shafts, with the rotation of the mass forcing the trough to vibrate in a vertical plane running through the longitudinal axis of the trough. The trough is open at both ends and flexibly supported on a rigid base, in a substantially horizontal position. Depending on the desired transport speed, the control system, equipped with a checking-measuring-controlling device and a frequency converter, adequately varies the phase of the inertial vibrators by changing the value of the exciting force and hence the amplitude and direction of vibration of the trough, thus causing a change in the feed transport speed. Such solutions have been disclosed, for example, in US patent descriptions US5615763A and US6598735B1.

From other US patent descriptions: US3053379A and US4771894A conveyors are known, in which the trough, suspended from the spring system, is excited to vibrate by means of two counter-rotating, self-synchronizing vibrators. The resultant force, coming from the vibrator system, passes through the centre of mass of the trough system, causing the trough to vibrate and the feed to be transported.

In Polish patent application P.425951, a vibrating conveyor is disclosed, comprising a vibrating drive and a trough, the trough being open at at least one end and in a substantially horizontal position and flexibly supported on a rigid base by a system of parallel springing bars, the bars are inclined at the same angle to the horizontal plane and evenly disposed over the entire length of the trough, characterized in that a mass of an eliminator is mounted on the trough structure by means of evenly disposed eliminator springing bars, inclined to the horizontal at the same angle as the angle of inclination of the trough springing bars and that the vibrating drive are two counter-rotating electrovibrators, suspended from the trough at an angle perpendicular to the trough springing bars and eliminator springing bars, by means of a springing suspension being an element of vibration transfer to the trough. The rotation axes of the electrovibrators are perpendicular to the vertical plane running through the longitudinal axis of the trough and, in addition, the electrovibrators are connected, via known means of drive transmission, to electric motors equipped with regulators of rotational speed.

From another Polish patent application P. 425950, which discloses a vibrating conveyor according to the preamble of claim 1 and a method according to the preamble of claim 3, a vibrating conveyor is known comprising the trough, open at least one end and flexibly supported in a substantially horizontal position, and a vibrating drive, the drive being a pair of self-synchronizing counter-rotating electrovibrators suspended from the trough of the conveyor at such an angle that their resultant force passes through the centre of gravity of the trough, the centre lying in the vertical plane running through the longitudinal axis of the trough, and the rotation axes of the electrovibrators are perpendicular to that plane. Mass of an eliminator is mounted on the trough by means of an additional flexible suspension in such a way that its centre of gravity coincides with the centre of gravity of the trough, and in addition, the mass of the eliminator has limited degrees of freedom to the translation one in the direction consistent with the direction of the resultant force of the electrovibrators, which are connected, via known means of drive transmission, to electric motors equipped with regulators of rotational speed.

The objective of the invention is to develop a conveyor that does not have a long coasting time, causing the feed to be transported relatively long after the drive is switched off, and in which the problem of self-synchronization of the vibrators when the transport is stopped does not occur. The present invention solves the above technical problems and additionally simplifies the construction of the conveyor.

According to the invention, a vibrating conveyor as stated in claim 1 and a method as stated in claim 3 are provided.

The essence of the vibrating conveyor, comprising, the through being open at at least one end and in a substantially horizontal position and flexibly supported on a rigid base by means of coil springs, as well as Frahm's dynamic eliminator, the latter being a mass of the eliminator, the mass flexibly suspended from the trough structure, by means of a system of springing bars evenly disposed over the length of the mass of the eliminator and inclined to the horizontal at the same angle, wherein the centre of gravity of the mass of the eliminator coincides in the horizontal projection with the centre of gravity of the trough, and further comprising a vibrating drive, connected, via known means of drive transmission, to an electric motor equipped with a regulator of rotational speed, is that the vibrating drive is one inertial electrovibrator with the axis of the shaft perpendicular to the vertical plane running through the longitudinal axis of the trough and passing through the centre of gravity of the trough as well as the eliminator.

It is preferred that the angle of inclination of the springing bars relative to the longitudinal axis of the trough is in the range from 27° to 33°.

The essence of the method for controlling the operation of the vibrating conveyor, comprising, the through being open at at least one end and in a substantially horizontal position and flexibly supported on a rigid base by means of coil springs, as well as Frahm's dynamic eliminator, the latter being a mass of the eliminator, the mass flexibly suspended from the trough structure, by means of a system of springing bars evenly disposed over the length of the mass of the eliminator and inclined to the horizontal at the same angle, wherein the centre of gravity of the mass of the eliminator coincides in the horizontal projection with the centre of gravity of the trough, and further comprising a vibrating drive, which is one inertial electrovibrator with the axis of the shaft perpendicular to the vertical plane running through the longitudinal axis of the trough and passing through the centre of gravity of the trough, connected, via known means of drive transmission, to an electric motor equipped with a regulator of rotational speed, is that:

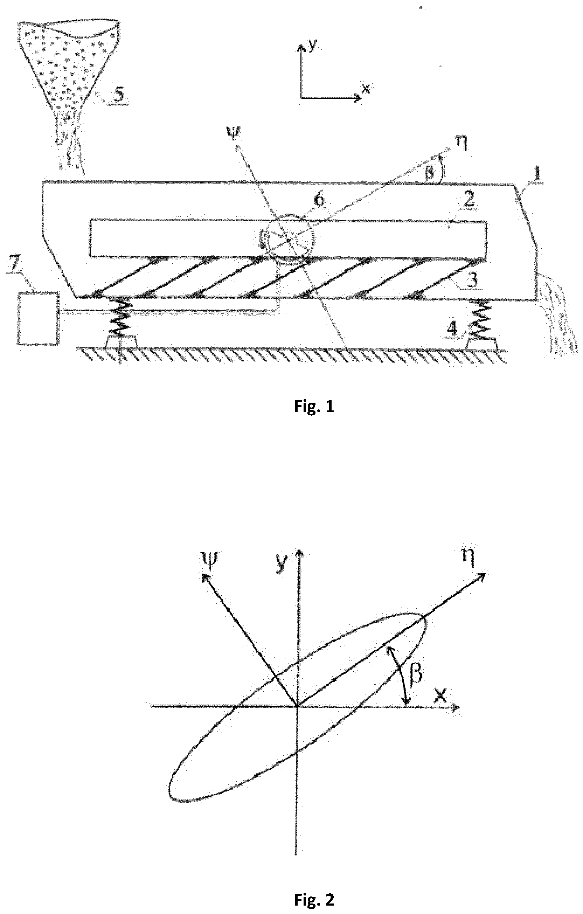

- in order to set the transporting operation mode of the conveyor, elliptical vibrations (Fig. 2) of the trough are induced by setting the operation frequency $\omega_{ele}$ of the electrovibrator by means of a regulator so that the frequency is equal to the frequency of the mass of the eliminator on its suspension, which is expressed by the equation:

$$\omega_{ele} = \sqrt{\frac{k_{el}}{m_{el}}}$$

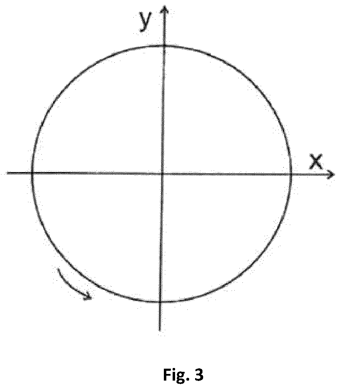

wherein: $\omega_{ele}$ is the operation frequency of the electrovibrator, $k_{el}$ is the total rigidity of the system of springing bars (3) at the direction perpendicular to their longitudinal axis, and $m_{el}$ is the mass of the eliminator,
- and in order to stop the feed transport, circular-like vibrations (Fig. 3) of the trough (1) are induced in such a way that the operation frequency $\omega_{ele}$ of the electrovibrator is set by means of a regulator without stopping the electrovibrator, so as to leave the antiresonance zone of the system, i.e.:

$$\omega_{ele} \neq \sqrt{\frac{k_{el}}{m_{el}}}$$

The invention is explained on the basis of the drawing, in which Fig. 1 shows schematically the vibrating conveyor, Fig. 2 shows the characteristics of elliptical vibrations of the conveyor trough during feed transport, and Fig. 3 shows the characteristics of circular vibrations of the conveyor trough when the transport is stopped.
The vibrating conveyor shown in Fig. 1 comprises a horizontal trough 1 open on both ends, which has been flexibly supported on a rigid base by means of a flexible suspension 4, disposed symmetrically relative to its centre of gravity. The trough comprises Frahm's dynamic eliminator, which is the mass of the eliminator 2, flexibly suspended from the trough 1 structure, by means of springing bars 3 evenly disposed over the length of the mass of the eliminator 2. The bars are inclined relative to the horizontal transport surface of the trough at the same angle β of preferably 30°. In the horizontal projection, the centre of gravity of the mass of the eliminator 2 coincides with the centre of gravity of the trough 1. A vibrating drive is fixed to the trough 1, the drive being one inertial electrovibrator 6 with the axis of the shaft perpendicular to the vertical plane running through the longitudinal axis of the trough 1 and passing through the centre of gravity of trough 1. The electrovibrator 6 is equipped with a regulator 7 of rotational speed, the regulator being an inverter.
The method for controlling the operation of the vibrating conveyor is that in order to set the transporting operation mode of the conveyor, elliptical vibrations of the trough (Fig. 2) are induced by setting the operation frequency $\omega_{ele}$ of the electrovibrator 6 by means of the regulator 7 so that the operation frequency is equal to the frequency of the mass of the eliminator 2 on its suspension, which is expressed by the equation:

$$\omega_{ele} = \sqrt{\frac{k_{el}}{m_{el}}}$$

wherein: $\omega_{ele}$ is the operation frequency of the electrovibrator, $k_{el}$ is the rigidity of the springing bars 3 at the direction (ψ), perpendicular to their longitudinal axis, and $m_{el}$ is the mass of the eliminator 2. The feed is fed from the container 5 to the trough 1, whose vibrations cause the grains to be tossed in the direction (η) and transported along the trough 1. In order to stop the feed transport, circular-like vibrations of the trough 1 (Fig. 3) are induced in such a way that the operation frequency $\omega_{el}$ of the electrovibrator 6 is set by means of a regulator 7 without stopping the electrovibrator, so as to leave the anti-resonance zone of the system:

$$\omega_{ele} \neq \sqrt{\frac{k_{el}}{m_{el}}}$$

A particular advantage of the solution is that it allows to stop the transport without the need to stop the drive, as well as without the need for the system to pass through the resonance zones.
In addition, known conveyors are equipped with two or more electrovibrators operating synchronously. In such solutions, the self-synchronization of vibrators often causes major problems and requires a proper geometry of the conveyor. By using one electrovibrator in the present invention, this problem has been eliminated.

## Claims

1. A vibrating conveyor, comprising a trough (1), the trough being open at at least one end and in a substantially horizontal position and flexibly supported on a rigid base by means of coil springs (4), as well as Frahm's dynamic eliminator, the latter being a mass of the eliminator (2), the mass flexibly suspended from the trough (1) structure, by means of a system of springing bars (3) evenly disposed over the length of the mass of the eliminator (2) and inclined to the horizontal at the same angle (β), wherein the centre of gravity of the mass of the eliminator (2) coincides in the horizontal projection with the centre of gravity of the trough (1), and further comprising a vibrating drive, connected, via known means of drive transmission, to an electric motor equipped with a regulator (7) of rotational speed, **characterized in that** the vibrating drive is one inertial electrovibrator (6) with the axis of the shaft perpendicular to the vertical plane running through the longitudinal axis of the trough (1) and passing through the centre of gravity of the trough (1) as well as the eliminator (2).

2. The vibrating conveyor, according to claim 1, **characterized in that** the angle (β) of inclination of the springing bars (3) relative to the longitudinal axis of the trough (1) is in the range from 27° to 33°.

3. A method for controlling the operation of the vibrating conveyor, comprising a trough (1), the trough being open at at least one end and in a substantially horizontal position and flexibly supported on a rigid base by means of coil springs (4), as well as Frahm's dynamic eliminator, the latter being a mass of the eliminator (2), the mass flexibly suspended from the trough (1) structure, by means of a system of springing bars (3) evenly disposed over the length of the mass of the eliminator (2) and inclined to the horizontal at the same angle (β), wherein the centre of gravity of the mass of the eliminator (2) coincides in the horizontal projection with the centre of gravity of the trough (1), and further comprising a vibrating drive, **characterized in that** the vibrating drive is one inertial electrovibrator (6) with the axis of the shaft perpendicular to the vertical plane running through the longitudinal axis of the trough (1) and passing through the centre of gravity of the trough (1) as well as the eliminator (2), the electrovibrator equipped with a regulator (7) of rotational speed, wherein

- in order to set the transporting operation mode of the conveyor, elliptical vibrations of the trough are induced by setting the operation frequency $\omega_{ele}$ of the electrovibrator (6) by means of the regulator (7) so that the frequency is equal to the frequency of the mass of the eliminator (2)

on its suspension, which is expressed by the equation:

$$\omega_{ele} = \sqrt{\frac{k_{el}}{m_{el}}}$$

wherein: $\omega_{ele}$ is the operation frequency of the electrovibrator, $k_{el}$ is the rigidity of the springing bars (3) at the direction perpendicular to their longitudinal axis, and $m_{el}$ is the mass of the eliminator (2),

- and in order to stop the feed transport, circular-like vibrations of the trough (1) are induced in such a way that the operation frequency $\omega_{ele}$ of the electrovibrator (6) is set by means of the regulator (7) without stopping the electrovibrator, so as to leave the anti-resonance zone of the system, i.e.:

$$\omega_{ele} \neq \sqrt{\frac{k_{el}}{m_{el}}}$$

## Patentansprüche

1. Ein Schwingförderer, umfassend einen Trog (1), wobei der Trog an mindestens einem Ende offen ist sowie sich in einer im Wesentlichen horizontalen Position befindet und mittels Schraubenfedern (4) federnd auf einer starren Basis gestützt ist, sowie dynamischen Frahm-Eliminator, wobei letzterer eine Masse des Eliminators (2) ist, wobei die Masse mittels eines Systems von gleichmäßig über die Länge der Masse des Eliminators (2) angeordneten und im gleichen Winkel (β) zur Horizontalen geneigten Federstäben (3) flexibel an der Struktur des Troges (1) aufgehängt ist, wobei der Schwerpunkt der Masse des Eliminators (2) in der horizontalen Projektion mit dem Schwerpunkt des Troges (1) zusammenfällt, und ferner umfassend einen über bekannte Antriebsmittel mit einem mit einem Drehzahlregler (7) ausgestatteten Elektromotor verbundenen Schwingantrieb, **dadurch gekennzeichnet, dass** der Schwingantrieb ein inertialer Elektrovibrator (6) mit der zu der durch die Längsachse des Troges (1) verlaufenden und auch durch den Schwerpunkt des Troges (1) sowie des Eliminators (2) durchgehenden vertikalen Ebene senkrechten Wellenachse ist.

2. Der Schwingförderer nach Anspruch 1, **dadurch gekennzeichnet, dass** der Winkel (β) der Neigung der Federstäbe (3) relativ zu der Längsachse des Troges (1) im Bereich von 27° bis 33° liegt.

3. Ein Verfahren zum Steuern des Betriebs des Schwingförderers, umfassend einen Trog (1), wobei der Trog an mindestens einem Ende offen ist sowie sich in einer im Wesentlichen horizontalen Position befindet und mittels Schraubenfedern (4) federnd auf einer starren Basis gestützt ist, sowie dynamischen Frahm-Eliminator, wobei letzterer eine Masse des Eliminators (2) ist, wobei die Masse mittels eines Systems von gleichmäßig über die Länge der Masse des Eliminators (2) angeordneten und im gleichen Winkel (β) zur Horizontalen geneigten Federstäben (3) flexibel an der Struktur des Troges (1) aufgehängt ist, wobei der Schwerpunkt der Masse des Eliminators (2) in der horizontalen Projektion mit dem Schwerpunkt des Troges (1) zusammenfällt, und ferner umfassend einen Schwingantrieb, **dadurch gekennzeichnet, dass** der Schwingantrieb ein inertialer Elektrovibrator (6) mit der zu der durch die Längsachse des Troges (1) verlaufenden und auch durch den Schwerpunkt des Troges (1) sowie des Eliminators (2) durchgehenden vertikalen Ebene senkrechten Wellenachse ist, wobei der Elektrovibrator mit einem Drehzahlregler (7) ausgestattet ist, wobei

  - um die Transport-Betriebsmodus des Förderers einzustellen, werden elliptische Schwingungen des Troges induziert, indem die Betriebsfrequenz $\omega_{ele}$ des Elektrovibrators (6) mittels des Reglers (7) so eingestellt wird, dass die Frequenz gleich der Frequenz der Masse des Eliminators (2) an seiner Aufhängung ist, was durch die Gleichung ausgedrückt wird:

$$\omega_{ele} = \sqrt{\frac{k_{el}}{m_{el}}}$$

  wobei: $\omega_{ele}$ die Betriebsfrequenz des Elektrovibrators ist, $k_{el}$ die Steifigkeit der Federstäbe (3) in der zu ihrer Längsachse senkrechten Richtung ist, und $m_{el}$ die Masse des Eliminators (2) ist,
  - und um den Vorschubtransport zu stoppen, werden kreisformähnliche Schwingungen des Troges (1) derart induziert, dass die Betriebsfrequenz $\omega_{ele}$ des Elektrovibrators (6) mittels des Reglers (7) eingestellt wird ohne den Elektrovibrator zu stoppen, sodass die Antiresonanz-Zone des Systems verlassen wird, d. h.:

$$\omega_{ele} \neq \sqrt{\frac{k_{el}}{m_{el}}}$$

**Revendications**

1. Un convoyeur vibrant, comprenant une auge (1), l'auge étant ouverte à au moins une extrémité et en position sensiblement horizontale, et appuyée de manière flexible sur un base rigide au moyen de ressorts hélicoïdaux (4), ainsi qu'un l'éliminateur dynamique de Frahm, ce dernier étant une masse de l'éliminateur (2), la masse étant suspendue de manière flexible à la structure de l'auge (1), au moyen d'un système de barres élastiques (3) disposées uniformément sur la longueur de la masse de l'éliminateur (2) et incliné à l'horizontale au même angle (β), le centre de gravité de la masse de l'éliminateur (2) coïncidant dans la projection horizontale avec le centre de gravité de l'auge (1), et comprenant en outre un entraînement vibrant, relié, par des moyens de transmission connus, à un moteur électrique équipé d'un régulateur (7) de la vitesse de rotation, **caractérisé en ce que** l'entraînement vibrant est un électrovibrateur inertiel (6) dont l'axe de l'arbre est perpendiculaire au plan vertical passant par l'axe longitudinal de l'auge (1) et passant par le centre de gravité de l'auge (1) ainsi que par l'éliminateur (2).

2. Le convoyeur vibrant, selon la revendication 1, **caractérisé en ce que** l'angle (β) d'inclinaison des barres élastiques (3) par rapport à l'axe longitudinal de l'auge (1) est compris entre 27° et 33°.

3. Procédé de contrôle du fonctionnement d'un convoyeur vibrant, comprenant une auge (1), l'auge étant ouverte à au moins une extrémité et en position sensiblement horizontale, et appuyée de manière flexible sur un base rigide au moyen de ressorts hélicoïdaux (4), ainsi qu'un l'éliminateur dynamique de Frahm, ce dernier étant une masse de l'éliminateur (2), la masse étant suspendue de manière flexible à la structure de l'auge (1), au moyen d'un système de barres élastiques (3) disposées uniformément sur la longueur de la masse de l'éliminateur (2) et incliné à l'horizontale au même angle (β), le centre de gravité de la masse de l'éliminateur (2) coïncidant dans la projection horizontale avec le centre de gravité de l'auge (1), et comprenant en outre un entraînement vibrant, **caractérisé en ce que** l'entraînement vibrant est un électrovibrateur inertiel (6) dont l'axe de l'arbre est perpendiculaire au plan vertical passant par l'axe longitudinal de l'auge (1) et passant par le centre de gravité de l'auge (1) ainsi que par l'éliminateur (2), l'électrovibrateur étant équipé d'un régulateur (7) de la vitesse de rotation, dans laquelle

- afin de régler le mode de fonctionnement de transport du convoyeur, des vibrations elliptiques de l'auge sont induites en réglant la fréquence $\omega_{ele}$ de fonctionnement de l'électrovibrateur (6) au moyen du régulateur (7) de sorte que la fréquence soit égal à la fréquence de la masse de l'éliminateur (2) sur sa suspension, qui est exprimée par l'équation:

$$\omega_{ele} = \sqrt{\frac{k_{el}}{m_{el}}}$$

dans laquelle : $\omega_{ele}$ est la fréquence de fonctionnement de l'électrovibrateur, $k_{el}$ est la rigidité des barres élastiques (3) dans la direction perpendiculaire à leur axe longitudinal, et $m_{el}$ est la masse de l'éliminateur (2),

- et afin d'arrêter le transport d'alimentation, des vibrations circulaires de l'auge (1) sont induites de telle sorte que la fréquence de fonctionnement $\omega_{ele}$ de l'électrovibrateur (6) soit réglée au moyen du régulateur (7) sans arrêter l'électrovibrateur, de manière à quitter la zone d'antirésonance du système, c'est-à-dire:

$$\omega_{ele} \neq \sqrt{\frac{k_{el}}{m_{el}}}$$

EP 3 992 119 B1

**Fig. 1**

**Fig. 2**

**Fig. 3**

**EP 3 992 119 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5615763 A
- US 6598735 B1
- US 3053379 A
- US 4771894 A
- PL P425951
- PL P425950